# EUROPEAN PATENT SPECIFICATION

(11) **EP 2 990 940 B1**
(45) Date of publication and mention of the grant of the patent: **29.04.2020**
(21) Application number: 13883169.8
(22) Date of filing: 25.10.2013
(51) Int. Cl.: G06F 3/048

(54) **ICON DISPLAY METHOD AND APPARATUS**
SYMBOLANZEIGEVERFAHREN UND VORRICHTUNG
PROCÉDÉ ET APPAREIL D'AFFICHAGE D'ICONE

(30) Priority: 24.04.2013 CN 201310146121
(43) Date of publication of application: 02.03.2016
(73) Proprietor: Xiaomi Inc., Beijing 100085 (CN)
(72) Inventor: JIN, Fan, Beijing 100085 (CN); SUN, Daqing, Beijing 100085 (CN); WANG, Ying, Beijing 100085 (CN)
(74) Representative: Cabinet Beau de Loménie
(86) International application number: PCT/CN2013/085927
(87) International publication number: WO 2014/173097

(56) References cited:
- CN-A- 1 855 021
- CN-A- 102 333 153
- CN-A- 102 685 034
- CN-A- 103 019 659
- CN-A- 103 226 430
- US-A- 5 940 078
- US-A1- 2009 164 923

## Description

### TECHNICAL FIELD

The present invention relates to the field of computer technology, and more particularly, to a method for displaying an icon and a device thereof.

### BACKGROUND

Nowadays, with the development of application technology, various kinds of applications have emerged, and these applications may be installed on a terminal by a user. After the applications are successfully installed, icons corresponding to the applications are displayed through the terminal on a desktop of an operating system of the terminal, and the user may run the applications corresponding to the icons by clicking or double clicking the icons.

In general, the icons are placed on the desktop of the operating system and all of them are motionless. Though an animation can be displayed inside some of the icons, for example, a videotape may be scrolling in an icon, or a four-leaf clover may be gently swinging in an icon, the icon itself is still motionless.

It can be seen that display effects of icons are relatively simple.

Document US 5,940,078 A discloses a method for altering of an icon box when an event effecting the icon box occurs.

### SUMMARY

Embodiments of the present invention provide a method for displaying an icon and a device thereof. The method and the device are defined in the appended claims 1 and 9. Further aspects of the invention are defined in the dependent claims. Embodiments which do not fall within the scope of the claims do not describe part of the present invention.

In another aspect, there is provided a device for displaying an icon, and the device includes:
a monitoring module configured to monitor whether there is an event which is performed with respect to the icon and controls the icon to be displayed, and to trigger a determining module to perform an operation when the event which controls the icon to be displayed is monitored;
the determining module configured to determine animation display parameters according to properties of the icon; and
a display module configured to control the icon to be displayed in an animation manner in accordance with the animation display parameters.

In still another aspect, there is provided a computer program which, when being executed on a device, performs any one of the above methods.

The technical solutions provided by the embodiments of the present invention bring about some advantageous effects, which may include:
Through an icon with respect to which an event that controls the icon to be displayed is monitored, animation display parameters are determined according to properties of the icon, and the icon is controlled to be displayed in an animation manner in accordance with the determined animation display parameters, such that display effects of the icon are more enriched.

It should be understood that both the above general description and the following detailed description are illustrative, which do not limit the present invention.

### BRIEF DESCRIPTION OF THE DRAWINGS

In order to explain the technical solutions in the embodiments of the present invention more clearly, a simple introduction to the drawings required for describing the embodiments will be given below. Obviously, the drawings described below only illustrate some embodiments of the present invention, and for those skilled in the art, other drawings may be obtained based on these drawings without inventive labor.
FIG. 1 is an illustrative flowchart showing a method for displaying an icon provided by Embodiment 1 of the present invention;
FIG. 2 is an illustrative flowchart showing a method for displaying an icon provided by Embodiment 2 of the present invention;
FIG. 3 is an illustrative flowchart showing a method for displaying an icon provided by Embodiment 3 of the present invention;
FIG. 4 is an illustrative diagram showing a device for displaying an icon provided by Embodiment 4 of the present invention

The specific embodiments of the present invention are illustrated by the above-mentioned drawings, and detailed descriptions will be given hereinafter. These drawings and literal descriptions do not intend to limit the scope of concept of the present invention in any manner, but to explain the concept of the present invention for those skilled in the art by referring to specific embodiments.

### DETAILED DESCRIPTION

In order to make purposes, technical solutions and advantages of the present invention more clear, hereinafter, the embodiments of the present invention will be further described in detail in conjunction with the drawings.

### Embodiment 1

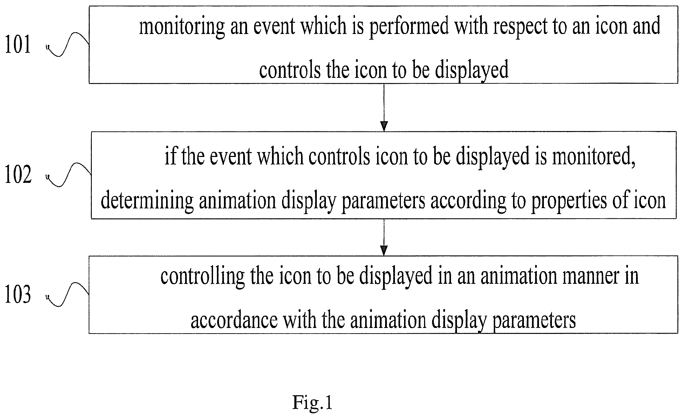

The embodiment of the present invention provides a method for displaying an icon, with reference to Fig.1.

It should be explained that, in the embodiment of the present invention, properties are preset for each icon, and the properties may be properties that are set by a user, or may be properties that are set for the icon by a terminal according to preset rules. The properties of each icon are associated with an identifier of the icon, and corresponding relations between the properties of the icon and the identifier of the icon are saved, such that the properties corresponding to the icon are searched according to the corresponding relations when an event which controls the icon to be displayed is triggered.

A manner of setting properties for an icon by a user may be as follows:
When a user installs a new application, a setup dialog box pops up in the case where the application is successfully installed and an icon corresponding to the application is added on a desktop, the dialog box contains alternative properties, the user may select the properties of the icon in the setup dialog box, and the selected properties are the properties of the icon.

Besides, after a user clicks an icon and starts up an application corresponding to the icon, the user may select properties of the icon in a setup menu of the application which contains alternative properties, and the selected properties are the properties of the icon.

A manner of setting properties for an icon by a terminal according to preset rules may be as follows:
When a user installs a new application, a terminal extracts related information of an application corresponding to the icon, and sets predefined properties of the newly added icon in accordance with setting rules, wherein the related information may include contents such as a name of the application corresponding to the icon, a category of the application corresponding to the icon, application information integrated within the icon, etc.

Further, properties may be literal contents or digital contents, or a combination of literal contents and digital contents.

For example, a user may set a category of properties of an application to be character, and corresponding properties are "lively", "steady" or the like. Further, a display effect of an icon corresponding to a lively property is that the icon quickly bounces; when an event which controls the icon to be displayed is triggered, animation display parameters corresponding to the icon are searched according to the property and an identifier of the icon, and the icon is controlled to be displayed in an animation manner in accordance with the animation display parameters. A display effect of an icon corresponding to a steady property is that the icon slowly bounces; when an event which controls the icon to be displayed is triggered, animation display parameters corresponding to the icon are searched according to the property and an identifier of the icon, and the icon is controlled to be displayed in an animation manner in accordance with the animation display parameters.

For example, when an installed application is "Microblog", predefined properties of the icon are set to include category "1", level "3" and aggressivity "5"; it is assumed that a newly added icon is "Twitter", and predefined properties of the icon are set to include category "1", level "6" and aggressivity "7". Setting rules herein may be preset within a terminal, and may be updated aperiodically.

Further, a manner of controlling an icon to be displayed in an animation manner may be classified into two types:
1) property animation: after an application is installed, an initial icon of the application will occur on a desktop, and when the icon is controlled to be displayed in an animation manner in accordance with animation parameters, the initial icon moves in different directions on a screen at a set frequency. For example, an icon is controlled to move up, down, left and right, and a visual effect of such movement of high frequency and small distance is that the icon is bouncing; an icon and another icon adjacent to the icon in right or left are controlled to move towards each other in opposite directions, and a visual effect of such movement of high frequency and small distance is that the icons are colliding with each other.
2) sequence frame: after an application is installed, an initial icon of the application will occur on a desktop, and regeneration icons of a set frame number are generated based on the initial icon. Taking a short message icon as example, an initial icon is an envelope located in the middle, and the number of regeneration icons is 4, wherein envelopes are respectively located at orientations of upper left, upper right, lower right and lower left. When an icon is controlled to be displayed in an animation manner in accordance with animation parameters, an initial icon and regeneration icons are displayed in a set sequence at a set frequency in a display area of an icon of short message application, and when the frequency is higher, a visual effect is also that the icon is bouncing.

A flow of the method includes the following steps.

In step 101, monitoring whether there is an event which is performed with respect to an icon and controls the icon to be displayed.

In step 102, if the event which controls the icon to be displayed is monitored, determining animation display parameters according to properties of the icon.

In step 103, controlling the icon to be displayed in an animation manner in accordance with the animation display parameters.

In the embodiment of the present invention, through an icon with respect to which an event that controls the icon to be displayed is monitored, properties corresponding to the icon are queried, animation display parameters are determined according to the queried properties, and the icon is controlled to be displayed in an animation manner in accordance with the determined animation display parameters, such that display effects of the icon are more enriched, and specifically, expressivity of the icon as well as interactivity between an application corresponding to the icon and a user are improved.

### Embodiment 2

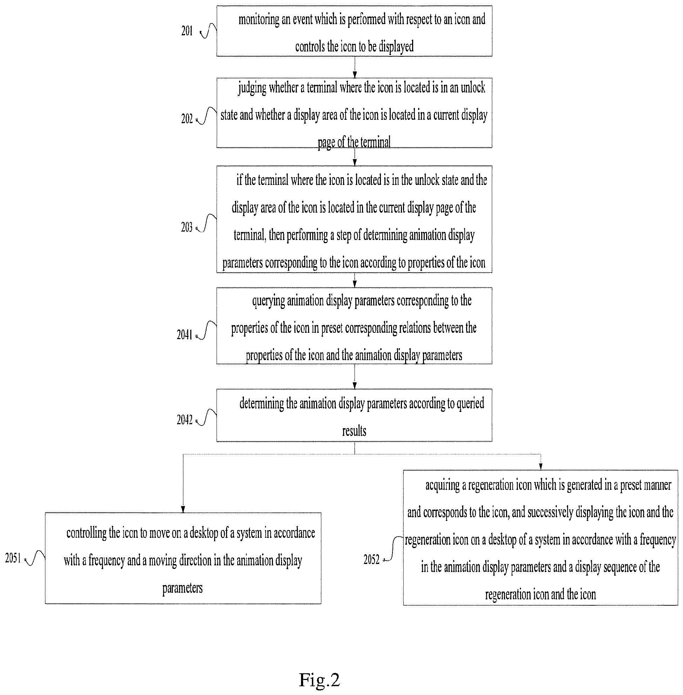

The embodiment of the present invention provides a method for displaying an icon, with reference to Fig.2.

It should be explained that properties of the icon in the embodiment of the present invention are predefined types of characters, and the method for displaying the icon is a method for displaying a single icon.

A flow of the method in the embodiment of the present invention includes the following steps.

In step 201, monitoring whether there is an event which is performed with respect to an icon and controls the icon to be displayed.

The event which is performed with respect to the icon and controls the icon to be displayed may be the following situations:
Firstly, an application corresponding to an icon receives new service information.

When the application receives the new service information, an identifier may be added on the icon of the application to inform a user of receiving of the new service information. For example, when a terminal has missed calls or unread short messages, the number of the missed calls or the number of the unread short messages is added on a phone icon or a short message icon as an identifier to inform the user. At this time, receiving the new service information by the application of the terminal is considered as triggering of an event that controls the icon to be displayed.

Further, when an application corresponding to an icon receives new service information, it is also required to judge a current state of a terminal, so as to decide whether to perform a step of controlling the icon to be displayed. Thus, the judgment process is to perform a step 202.

Secondly, a user clicks the icon.

Some terminals regard double clicking an icon as starting up of an application, thus, an event which controls the icon to be displayed may be triggered when the application is clicked single time. Since an action of clicking an icon and an action of double clicking an icon are required to be judged by a terminal, thus it may be configured that when time taken for clicking an icon is counted to be longer than pre-set time taken for judgment of double clicking the icon, an event which controls the icon to be displayed is triggered.

In step 202, judging whether a terminal where the icon is located is in an unlock state and whether a display area of the icon is in a current display page of the terminal.

For the situation where an application corresponding to an icon receives new service information in step 201, when there is a missed call or an unread short message, the terminal might be in a screen lock state, at this time, a user can not see any icon, so there is no need to control display effects of the icon. Thus, it is required to add a judging step before properties of the icon are queried; only when the terminal is in an unlock state, and a page where a first icon that receives new service information is located is a current display page, a step of querying the properties is performed.

For the situation where an event that a user clicks an icon is received in step 201, at this time, the terminal must be in an unlock state, thus a process of performing this step is not necessary. At this time, when an event which is performed with respect to an icon and controls the icon to be displayed is monitored, step 204 is directly performed.

In step 203, if the terminal where the icon is located is in the unlock state, and the display area of the icon is located in the current display page of the terminal, step 204 is performed.

In step 204, determining animation display parameters according to properties of the icon.

The process of determining the animation display parameters in the step 204 may include the following steps.

In step 2041, querying the animation display parameters corresponding to the properties of the icon in preset corresponding relations between the properties of the icon and the animation display parameters.

In step 2042, determining the animation display parameters according to queried results.

In pre-saved corresponding relations between properties and an identifier of an icon, the properties of the icon are queried according to the identifier of the icon corresponding to an event which controls the icon to be displayed.

For example, if a terminal has a missed call, then an application corresponding to a phone triggers an event which controls an icon to be displayed, pre-saved corresponding relations between properties and an identifier of the icon are queried through the identifier of the phone icon, thus acquiring that property corresponding to the icon is "lively"; and if a terminal has an unread short message, then after an application corresponding to the short message triggers an event which controls an icon to be displayed, pre-saved corresponding relations between properties and an identifier of the icon are queried through the identifier of the short message icon, thus acquiring that property corresponding to the icon is "steady".

After acquiring the properties of the icon, according to the properties of the icon, the animation display parameters of the icon are queried in pre-saved corresponding relations between the properties of the icon and animation display parameters.

Thereafter, the corresponding relations between the properties of the icon and the animation display parameters are queried through the identifier of the phone icon and property of "lively", animation display parameters corresponding to the property of "lively" which corresponds to the phone icon are obtained, namely, animation display parameters corresponding to an animation that "quickly bounces" are obtained, wherein the animation display parameters include: a moving frequency of the icon is a first frequency; and a moving manner of the icon is to control the icon to move upward a preset distance and move back to the initial position in an opposite direction after reaching the preset distance.

The corresponding relations between the properties of the icon and the animation display parameters are queried through the identifier of the short message icon and property of "steady", animation display parameters corresponding to the property of "steady" which corresponds to the short message icon are obtained, namely, animation display parameters corresponding to an animation that "slowly bounces" are obtained, wherein the animation display parameters include: a moving frequency of the icon is a second frequency; and a moving manner of the icon is to control the icon to move upward a preset distance and move back to the initial position in an opposite direction after reaching the preset distance, where the first frequency is greater than the second frequency.

In step 205, controlling the icon to be displayed in an animation manner in accordance with the animation display parameters.

Wherein, a specific manner of displaying an icon may be classified into the following two types:
2051: controlling the icon to move on a desktop of a system in accordance with a frequency and a moving direction in the animation display parameters; or
2052: acquiring a regeneration icon which is generated in a preset manner and corresponds to the icon, and displaying successively the icon and the regeneration icon on a desktop of a system in accordance with the frequency in the animation display parameters and a display sequence of the regeneration icon and the icon.

The manner in 2051 is used in the present embodiment.

At this time, if a terminal has a missed call, then a phone icon is displayed in such a manner that it "quickly bounces", which gives a user a feeling of "hurry come to see me, and open me up immediately"; and if a terminal receives a new short message and the short message is unread, then a short message icon is displayed in such a manner that it "slowly bounces", which gives a user a feeling of "ah, a new short message, check it if you are not busy", thereby improving interactivity between an icon and a user, and providing a more intuitive manner to inform the user of a situation of an application corresponding to the icon.

In the embodiment of the present invention, through an icon with respect to which an event that controls the icon to be displayed is monitored, properties corresponding to the icon are queried, animation display parameters are determined according to queried properties, and the icon is controlled to be displayed in an animation manner in accordance with the determined animation display parameters, such that display effects of the icon are more enriched, and specifically, expressivity of the icon as well as interactivity between an application corresponding to the icon and a user are improved.

### Embodiment 3

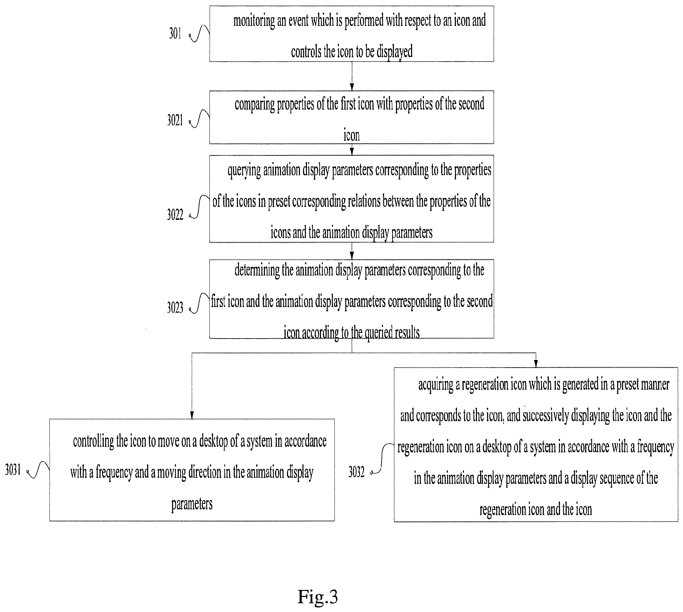

The embodiment of the present invention provides a method for displaying an icon, with reference to Fig.3.

It should be explained that properties of the icon in the embodiment of the present invention include one or more of category, level and aggressivity, and the method for displaying the icon is a method for interactively displaying a plurality of icons, which include a first icon for which an event which is performed with respect to the icon and controls the icon to be displayed is monitored, and a second icon adjacent to the first icon.

Further, descriptions in some steps are the same as those of the embodiment 2, which are omitted herein.

A flow of the method in the embodiment of the present invention includes the following steps.

In step 301, monitoring whether there is an event which is performed with respect to an icon and controls the icon to be displayed.

In the embodiment of the present invention, the event which is performed with respect to the icon and controls the icon to be displayed is:
updating a position of the first icon to be adjacent to the second icon; or
the first icon occurring on a desktop of a system for the first time and being adjacent to the second icon.

An event for updating an icon may be a case where after a new application is installed by a user, an icon corresponding to the application is added on a desktop of a terminal, and an event which controls the icon to be displayed is triggered after the icon is newly added; or may be a case where a user performs an operation of changing a position of the icon, and an event which controls the icon to be displayed is triggered after the icon is dragged to a new position.

In step 302, determining animation display parameters according to properties of the icon.

Wherein, process of determining the animation display parameters according to the properties of the icon in the step 302 may include the following steps.

In step 3021, comparing properties of the first icon with properties of the second icon.

The second icon adjacent to the first icon may be a preceding icon adjacent to the first icon or a succeeding icon adjacent to the first icon, or both of them. The preceding icon or the succeeding icon adjacent to the first icon herein may be determined according to identifiers of position arrangements of icons on a desktop of a terminal.

Further, when the first icon is located at an edge in the current desktop of the terminal, namely, only one icon is adjacent to the first icon, then only the preceding icon or the succeeding icon adjacent to the first icon is determined as the second icon.

The properties of the first icon are queried according to pre-stored corresponding relations between the properties and an identifier of the icon.

For example, after the properties of the first icon are queried, a category is set to be "1", and a level is set to be "5" in a first situation; the category is set to be "1", and aggressivity is set to be "strong" in a second situation; and the category is set to be "1", the level is set to be "5': and the aggressivity is set to be "strong" in a third situation.

The properties of the second icon are queried according to pre-stored corresponding relations between the properties and an identifier of the icon.

For example, after the properties of the second icon are queried, a category is set to be "1" and a level is set to be "10" in a first situation; the category is set to be "1", and aggressivity is set to be "strong" in a second situation; and the category is set to be "1", the level is set to be "10", and the aggressivity is set to be "strong" in a third situation.

Since the properties of the first icon and the properties of the second icon respectively contain one or more property values, the property values of the same category are compared with each other respectively, and comparison results of the property values in each category are determined.

In step 3022, querying animation display parameters corresponding to the first icon and animation display parameters corresponding to the second icon in preset corresponding relations between the comparison results and the animation display parameters.

In step 3023, determining the animation display parameters corresponding to the first icon and the animation display parameters corresponding to the second icon according to queried results.

Property values of the properties of the first icon are compared with property values of the properties of the second icon, comparison results of the property values of the same category may be obtained, wherein the comparison results of the property values of the same category may be: the property values of the properties of the first icon are greater than the property values of the properties of the second icon; or the property values of the properties of the first icon are smaller than the property values of the properties of the second icon; or the property values of the properties of the first icon are equal to the property values of the properties of the second icon. Since the properties of the icons may contain a variety of properties, the final comparison results may include the comparison results corresponding to all the properties, and eventually, the animation display parameters corresponding to the comparison results are respectively queried in the corresponding relations between the comparison results and the animation display parameters according to the respective comparison results, and are respectively displayed in a certain sequence at the time of final displaying.

Further, the above contents are explained by an example.

For the first situation of the acquired properties of the first icon, and the first situation of the properties of the second icon, after the property values are compared, the categories of the first icon and the second icon are the same, but the levels of the first icon and the second icon are different, wherein after the categories are compared, animations of the icons corresponding to the categories are not further determined according to the result. For the properties of "level" of the first icon and the second icon, the obtained comparison result is that "the property values of the properties of the first icon are smaller than the property values of the properties of the second icon". From the corresponding relation between the comparison results and the animation display parameters, the animation display parameters of the first icon are obtained, namely, animation display parameters corresponding to "nodding to the icon with higher property values" are obtained, wherein the animation display parameters include: a replacing frequency of regeneration icons corresponding to the icon is a third frequency; and a moving manner of the icon is to select a serial number of the regeneration icons and to control a display sequence of the respective regeneration icons. The animation display parameters of the second icon are obtained, namely, animation display parameters corresponding to "icon heading up" are obtained, wherein the animation display parameters include: a replacing frequency of regeneration icons corresponding to the icon is a third frequency; and a moving manner of the icon is to select a serial number of the regeneration icons and to control a display sequence of the respective regeneration icons.

For the second situation of the acquired properties of the first icon, and the second situation of the properties of the second icon, after the property values are compared, the categories and the aggressivities of the first icon and the second icon are the same, wherein after the categories are compared, animations of the icons corresponding to the categories are not further determined according to the result. For the properties of "aggressivity" of the first icon and the second icon, the obtained comparison result is that "the property values of the properties of the first icon are equal to the property values of the properties of the second icon". From the corresponding relations between the comparison result and the animation display parameters, the animation display parameters of the first icon are obtained, namely, animation display parameters corresponding to "colliding with adjacent icons" are obtained, wherein the animation display parameters include: a moving frequency of the icon is a fourth frequency; and a moving manner of the icon is to control the icon to move a preset distance to the right, and move back to the initial position in an opposite direction after reaching the preset distance. The animation display parameters of the second icon are obtained, namely, animation display parameters corresponding to "colliding with adjacent icons" are obtained, wherein the animation display parameters include: a moving frequency of the icon is a fourth frequency; and a moving manner of the icon is to control the icon to move a preset distance to the left, and move back to the initial position in an opposite direction after reaching the preset distance.

For the third situation of the acquired properties of the first icon, and the third situation of the properties of the second icon, after the property values are compared, the categories and the aggressivities of the first icon and the second icon are the same, but the levels of the first icon and the second icon are different, wherein after the categories are compared, animations of the icons corresponding to the categories are not further determined according to the result. For the properties of "level" of the first icon and the second icon, the obtained comparison result is that "the property values of the properties of the first icon are smaller than the property values of the properties of the second icon". From the corresponding relations between the comparison result and the animation display parameters, the animation display parameters of the first icon are obtained, namely, animation display parameters corresponding to "nodding to the icon with higher property values" are obtained, wherein the animation display parameters include: a replacing frequency of regeneration icons corresponding to the icon is a third frequency; and a moving manner of the icon is to select a serial number of the regeneration icons and to control a display sequence of the respective regeneration icons. The animation display parameters of the second icon are obtained, namely, animation display parameters corresponding to "icon heading up" are obtained, wherein the animation display parameters include: a replacing frequency of regeneration icons corresponding to the icon is a third frequency; and a moving manner of the icon is to select a serial number of the regeneration icons and to control a display sequence of the respective regeneration icons. Further, for the properties of "aggressivity" of the first icon and the second icon, the obtained comparison result is that "the property values of the properties of the first icon are equal to the property values of the properties of the second icon". From the corresponding relations between the comparison result and the animation display parameters, the animation display parameters of the first icon are obtained, namely, animation display parameters corresponding to "colliding with adjacent icons" are obtained, wherein the animation display parameters include: a moving frequency of the icon is a fourth frequency; and a moving manner of the icon is to control the icon to move a preset distance to the right, and move back to the initial position in an opposite direction after reaching the preset distance. The animation display parameters of the second icon are obtained, namely, animation display parameters corresponding to "colliding with adjacent icons" are obtained, wherein the animation display parameters include: a moving frequency of the icon is a fourth frequency; and a moving manner of the icon is to control the icon to move a preset distance to the left, and move back to the initial position in an opposite direction after reaching the preset distance. Wherein, a display sequence of two animations corresponding to the two properties of "level" and "aggressivity" is not limited.

In step 303, controlling the icon to be displayed in an animation manner in accordance with the animation display parameters.

Wherein, a specific manner of displaying an icon may be classified into two types:
3031: controlling the icon to move on a desktop of a system in accordance with a frequency and a moving direction in the animation display parameters; or
3032: acquiring a regeneration icon which is generated in a preset manner and corresponds to the icon, displaying successively the icon and the regeneration icon on a desktop of a system in accordance with the frequency in the animation display parameters and a display sequence of the regeneration icon and the icon.

In the embodiment of the present invention, through an icon with respect to which an event that controls the icon to be displayed is monitored, properties corresponding to the icon are queried, properties of an icon adjacent to the icon are queried, animation display parameters are respectively determined according to the queried properties of the two icons, and the two icons are controlled to be displayed in an animation manner in accordance with the animation display parameters, such that display effects of the icons are more enriched, and specifically, expressivity of the icons is increased, interactivity is produced between the icons, and interactivity between an application and a user is improved.

### Embodiment 4

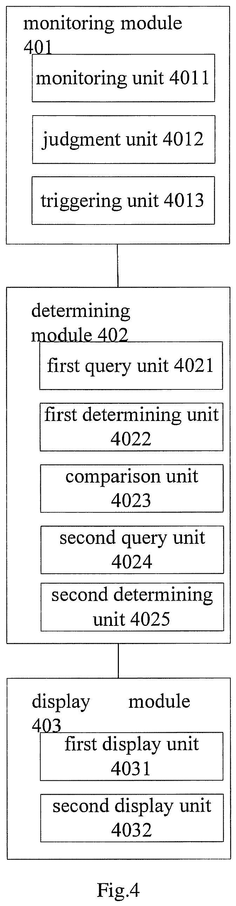

The embodiment of the present invention provides a device for controlling an icon to be displayed, with reference to Fig.4, the device includes:
a monitoring module 401 configured to monitor whether there is an event which is performed with respect to the icon and controls the icon to be displayed, and to trigger a determining module 402 to perform an operation when the event which controls the icon to be displayed is monitored;
the determining module 402 configured to determine animation display parameters according to properties of the icon; and
a display module 403 configured to control the icon to be displayed in an animation manner in accordance with the animation display parameters.

Wherein, in an embodiment, the event which is performed with respect to the icon and controls the icon to be displayed includes:
receiving new service information by an application corresponding to the icon; or
clicking the icon by a user.

Wherein, the monitoring module 401 includes:
a monitoring unit 4011 configured to monitor whether there is an event which is performed with respect to an icon and controls the icon to be displayed;
a judgment unit 4012 configured to judge whether a terminal where the icon is located is in an unlock state and whether a display area of the icon is located in a current display page of the terminal when the event which controls the icon to be displayed is receiving new service information by an application corresponding to the icon, and to transmit an instruction to a triggering unit when the terminal where the icon is located is in the unlock state and the display area of the icon is located in the current display page of the terminal; and
the triggering unit 4013 configured to trigger the determining module to perform an operation when the event which controls the icon to be displayed is clicking the icon by a user, and to receive the instruction from the judgment unit so as to trigger the determining module to perform an operation.

Wherein, the determining module 402 includes:
a first query unit 4021 configured to query animation display parameters corresponding to properties of the icon in preset corresponding relations between the properties of the icon and the animation display parameters; and
a first determining unit 4022 configured to determine the animation display parameters according to queried results.

Wherein, the icon includes a first icon and a second icon;
the event which is performed with respect to the icon and controls the icon to be displayed includes:
updating a position of the first icon to be adjacent to the second icon; or
the first icon occurring on a desktop of a system for the first time and being adjacent to the second icon.

Wherein, the properties include category and level.

Wherein, the determining module 402 includes:
a comparison unit 4023 configured to compare properties of the first icon with properties of the second icon;
a second query unit 4024 configured to query animation display parameters corresponding to the first icon and animation display parameters corresponding to the second icon in preset corresponding relations between comparison results and the animation display parameters; and
a second determining unit 4025 configured to determine the animation display parameters corresponding to the first icon and the animation display parameters corresponding to the second icon according to the queried results.

Wherein, the display module 403 includes:
a first display unit 4031 configured to control the icon to move on a desktop of a system in accordance with a frequency and a moving direction in the animation display parameters; and
a second display unit 4032 configured to generate a regeneration icon corresponding to the icon in a preset manner, and to successively display the icon and the regeneration icon on the desktop of the system in accordance with the frequency in the animation display parameters and a display sequence of the regeneration icon and the icon.

In the embodiment of the present invention, after an event which controls an icon to be displayed is received, properties of the icon corresponding to triggering the event are queried, animation display parameters are determined according to queried properties, and the icon is controlled to be displayed in an animation manner in accordance with the animation display parameters, such that display effects of the icon are enriched, and specifically, expressivity of the icon and interactivity of an application corresponding to the icon and a user are improved.

The serial numbers of the above embodiments of the present invention are only used for description, but not for showing the superiority and inferiority of the embodiments.

It should be understood by those skilled in the art that the whole or parts of steps in the above embodiments may be implemented by hardware, or by programs instructing the related hardware. The programs may be stored in a computer readable storage medium. The storage medium described above may be a read-only memory, a magnetic disc, an optical disc or the like.

The above descriptions are only for the preferred embodiments of the present invention, which are not used to limit the present invention.

## Claims

1. A method for displaying an icon, the method comprising:
monitoring (101, 201, 301) whether there is an event which is performed with respect to the icon and controls the icon to be displayed;
if the event which controls the icon to be displayed is triggered, determining (102) animation display parameters according to properties of the icon, said properties being preset by a user and comprising characters which define display effects corresponding to the characters; and
controlling (103) the icon to be displayed in an animation manner in accordance with the animation display parameters;
the method being **characterized in that** it further comprises a step of setting the properties for the icon by a user, this step comprising:
when a user installs a new application, displaying a setup dialog box if the application is successfully installed and an icon corresponding to the application is added on a desktop, wherein the dialog box contains alternative properties;
detecting the user's selection from the alternative properties contained in the setup dialog box; and
setting the selected properties to be the properties of the icon corresponding to the application.

2. The method according to claim 1, wherein the event which is performed with respect to the icon and controls the icon to be displayed comprises:
receiving new service information by an application corresponding to the icon; or
clicking the icon by a user.

3. The method according to claim 2, wherein when receiving the new service information by the application corresponding to the icon, the method further comprises:
judging (202) whether a terminal where the icon is located is in an unlock state and whether a display area of the icon is located in a current display page of the terminal; and
if the terminal where the icon is located is in the unlock state and the display area of the icon is located in the current display page of the terminal, performing (203) a step of determining the animation display parameters corresponding to the icon according to properties of the icon.

4. The method according to claim 2, wherein the determining (102) the animation display parameters according to the properties of the icon comprises:
querying (2041) animation display parameters corresponding to the properties of the icon in preset corresponding relations between the properties of the icon and the animation display parameters; and
determining (2042) the animation display parameters according to queried results.

5. The method according to claim 1, wherein the method is used for displaying a plurality of icons, which comprise a first icon and a second icon;
the event which is performed with respect to the plurality of icons and controls the plurality of icons to be displayed comprises:
updating a position of the first icon to be adjacent to the second icon; or
the first icon occurring on a desktop of a system for the first time and being adjacent to the second icon.

6. The method according to claim 5, wherein the properties comprise category and level.

7. The method according to claim 5, wherein the determining (102) the animation display parameters according to the properties of the plurality of icons comprises:
comparing (3021) properties of the first icon with properties of the second icon;
querying animation display parameters corresponding to the first icon and animation display parameters corresponding to the second icon in preset corresponding relations between comparison results and the animation display parameters; and
determining (3023) the animation display parameters corresponding to the first icon and the animation display parameters corresponding to the second icon according to the queried results.

8. The method according to claim 1, wherein the controlling (103) the icon to be displayed in the animation manner in accordance with the animation display parameters comprises:
controlling (2051, 3031) the icon to move on a desktop of a system in accordance with a frequency and a moving direction in the animation display parameters; or
generating (2052, 3032) a regeneration icon corresponding to the icon in a preset manner, and successively displaying the icon and the regeneration icon on a desktop of a system in accordance with a frequency in the animation display parameters and a display sequence of the regeneration icon and the icon.

9. A device for displaying an icon, the device comprising:
a monitoring module (401) configured to monitor whether there is an event which is performed with respect to the icon and controls the icon to be displayed, and to trigger a determining module to perform an operation when the event which controls the icon to be displayed is triggered;
the determining module (402) configured to determine animation display parameters according to properties of the icon, said properties being preset by a user and comprising characters which describe display effects corresponding to the characters; and
a display module (403) configured to control the icon to be displayed in an animation manner in accordance with the animation display parameters;
the device being **characterized in that** it further comprises a module configured to set the properties for the icon by a user, this module being configured to:
when a user installs a new application, display a setup dialog box if the application is successfully installed and an icon corresponding to the application is added on a desktop, wherein the dialog box contains alternative properties;
detect the user's selection from the alternative properties contained in the setup dialog box; and
set the selected properties to be the properties of the icon corresponding to the application.

10. The device according to claim 9, wherein the event which is performed with respect to the icon and controls the icon to be displayed comprises: receiving new service information by an application corresponding to the icon; or clicking the icon by a user;
the monitoring module (401) comprises:
a monitoring unit (4011) configured to monitor whether there is the event which is performed with respect to the icon and controls the icon to be displayed;
a judgment unit (4012) configured to judge whether a terminal where the icon is located is in an unlock state and whether a display area of the icon is located in a current display page of the terminal when the event which controls the icon to be displayed is receiving new service information by an application corresponding to the icon, and to transmit an instruction to a triggering unit (4013) when the terminal where the icon is located is in the unlock state and the display area of the icon is located in the current display page of the terminal; and
the triggering unit (4013) configured to trigger the determining module (402) to perform an operation when the event which controls the icon to be displayed is clicking the icon by a user, or to receive the instruction from the judgment unit (4012) so as to trigger the determining module (402) to perform an operation.

11. The device according to claim 10, wherein the determining module (402) comprises:
a first query unit (4021) configured to query animation display parameters corresponding to properties of the icon in preset corresponding relations between the properties of the icon and the animation display parameters; and
a first determining unit (4022) configured to determine the animation display parameters according to queried results.

12. The device according to claim 9, wherein the device is used for displaying a plurality of icons, which comprise a first icon and a second icon;
the event which is performed with respect to the plurality of icons and controls the plurality of icons to be displayed comprises:
updating a position of the first icon to be adjacent to the second icon; or
the first icon occurring on a desktop of a system for the first time and being adjacent to the second icon.

13. The device according to claim 12, wherein the determining module (402) comprises:
a comparison unit (4023) configured to compare properties of the first icon with properties of the second icon;
a second query unit (4024) configured to query animation display parameters corresponding to the first icon and animation display parameters corresponding to the second icon in preset corresponding relations between comparison results and the animation display parameters; and
a second determining unit (4025) configured to determine the animation display parameters corresponding to the first icon and the animation display parameters corresponding to the second icon according to the queried results.

14. The device according to claim 9, wherein the display module (403) comprises:
a first display unit (4031) configured to control the icon to move on a desktop of a system in accordance with a frequency and a moving direction in the animation display parameters; and
a second display unit (4032) configured to generate a regeneration icon corresponding to the icon in a preset manner, and to successively display the icon and the regeneration icon on the desktop of the system in accordance with the frequency in the animation display parameters and a display sequence of the regeneration icon and the icon.

15. A computer program which, when being executed on a device, performs a method according to any one of claims 1 to 8.

## Patentansprüche

1. Verfahren zum Anzeigen eines Symbols, wobei das Verfahren umfasst:
Überwachen (101, 201, 301), ob ein Ereignis vorliegt, das in Bezug auf das Symbol ausgeführt wird und das anzuzeigende Symbol steuert,
wenn das Ereignis ausgelöst wird, welches das anzuzeigende Symbol steuert, Bestimmen (102) von Animationsanzeigeparametern gemäß den Eigenschaften des Symbols, wobei die Eigenschaften von einem Benutzer voreingestellt werden und Zeichen umfassen, die den Zeichen entsprechende Anzeigeeffekte definieren, und
Steuern (103) des anzuzeigenden Symbols in einer Animationsart in Übereinstimmung mit den Animationsanzeigeparametern,
wobei das Verfahren **dadurch gekennzeichnet ist, dass** es ferner einen Schritt des Einstellens der Eigenschaften für das Symbol durch einen Benutzer umfasst, wobei dieser Schritt umfasst:
wenn ein Benutzer eine neue Anwendung installiert, Anzeigen eines Setup-Dialogfelds, wenn die Anwendung erfolgreich installiert ist, und es wird ein der Anwendung entsprechendes Symbol auf einem Desktop hinzugefügt, wobei das Dialogfeld alternative Eigenschaften enthält,
Erkennen der Benutzerauswahl anhand der alternativen Eigenschaften, die in dem Setup-Dialogfeld enthalten sind, und
Einstellen der ausgewählten Eigenschaften als die Eigenschaften des der Anwendung entsprechenden Symbols.

2. Verfahren nach Anspruch 1, wobei das Ereignis, das in Bezug auf das Symbol ausgeführt wird und das anzuzeigende Symbol steuert, umfasst:
Empfangen von neuen Dienstinformationen durch eine dem Symbol entsprechende Anwendung oder
Klicken auf das Symbol durch einen Benutzer.

3. Verfahren nach Anspruch 2, wobei das Verfahren beim Empfangen der neuen Dienstinformationen durch die dem Symbol entsprechende Anwendung ferner umfasst:
Beurteilen (202), ob sich ein Endgerät, wo sich das Symbol befindet, in einem Entsperrzustand befindet und ob sich ein Anzeigebereich des Symbols auf einer aktuellen Anzeigeseite des Endgeräts befindet, und
wenn sich das Endgerät, wo sich das Symbol befindet, in dem Entsperrzustand befindet und sich der Anzeigebereich des Symbols auf der aktuellen Anzeigeseite des Endgeräts befindet, Durchführen (203) eines Schrittes des Bestimmens der dem Symbol entsprechenden Animationsanzeigeparameter gemäß Eigenschaften des Symbols.

4. Verfahren nach Anspruch 2, wobei das Bestimmen (102) der Animationsanzeigeparameter gemäß den Eigenschaften des Symbols umfasst:
Abfragen (2041) von den Eigenschaften des Symbols entsprechenden Animationsanzeigeparametern in voreingestellten entsprechenden Beziehungen zwischen den Eigenschaften des Symbols und den Animationsanzeigeparametern, und
Bestimmen (2042) der Animationsanzeigeparameter gemäß abgefragten Ergebnissen.

5. Verfahren nach Anspruch 1, wobei das Verfahren zum Anzeigen von mehreren Symbolen verwendet wird, die ein erstes Symbol und ein zweites Symbol umfassen,
wobei das Ereignis, das in Bezug auf die mehreren Symbole ausgeführt wird und die mehreren anzuzeigenden Symbole steuert, umfasst:
Aktualisieren einer Position des ersten Symbols, um an das zweite Symbol anzugrenzen, oder
das erste Symbol tritt zum ersten Mal auf einem Desktop eines Systems auf und grenzt an das zweite Symbol an.

6. Verfahren nach Anspruch 5, wobei die Eigenschaften Kategorie und Höhe umfassen.

7. Verfahren nach Anspruch 5, wobei das Bestimmen (102) der Animationsanzeigeparameter gemäß den Eigenschaften der mehreren Symbole umfasst:
Vergleichen (3021) von Eigenschaften des ersten Symbols mit Eigenschaften des zweiten Symbols,
Abfragen von dem ersten Symbol entsprechenden Animationsanzeigeparametern und dem zweiten Symbol entsprechenden Animationsanzeigeparametern in voreingestellten entsprechenden Beziehungen zwischen Vergleichsergebnissen und den Animationsanzeigeparametern, und
Bestimmen (3023) der dem ersten Symbol entsprechenden Animationsanzeigeparameter und der dem zweiten Symbol entsprechenden Animationsanzeigeparameter gemäß den abgefragten Ergebnissen.

8. Verfahren nach Anspruch 1, wobei das Steuern (103) des anzuzeigenden Symbols in der Animationsart in Übereinstimmung mit den Animationsanzeigeparametern umfasst:
Steuern (2051, 3031) des Symbols, sodass es sich auf einem Desktop eines Systems in Übereinstimmung mit einer Häufigkeit und einer Bewegungsrichtung in den Animationsanzeigeparametern bewegt, oder
Erzeugen (2052, 3032) eines dem Symbol entsprechenden Regenerationssymbols in einer voreingestellten Weise, und aufeinanderfolgendes Anzeigen des Symbols und des Regenerationssymbols auf einem Desktop eines Systems in Übereinstimmung mit einer Häufigkeit in den Animationsanzeigeparametern und einer Anzeigereihenfolge des Regenerationssymbols und des Symbols.

9. Vorrichtung zum Anzeigen eines Symbols, wobei die Vorrichtung umfasst:
ein Überwachungsmodul (401), das dazu ausgestaltet ist, zu überwachen, ob ein Ereignis vorliegt, das in Bezug auf das Symbol ausgeführt wird und das anzuzeigende Symbol steuert, und ein Bestimmungsmodul auszulösen, um einen Vorgang auszuführen, wenn das Ereignis, welches das anzuzeigende Symbol steuert, ausgelöst wird,
wobei das Bestimmungsmodul (402) dazu ausgestaltet ist, Animationsanzeigeparameter gemäß Eigenschaften des Symbols zu bestimmen, wobei die Eigenschaften von einem Benutzer voreingestellt werden und Zeichen umfassen, welche Anzeigeeffekte beschreiben, die den Zeichen entsprechen, und
ein Anzeigemodul (403), das dazu ausgestaltet ist, das anzuzeigende Symbol in einer Animationsart in Übereinstimmung mit den Animationsanzeigeparametern zu steuern,
wobei die Vorrichtung **dadurch gekennzeichnet ist, dass** sie ferner ein Modul umfasst, das dazu ausgestaltet ist, die Eigenschaften für das Symbol durch einen Benutzer einzustellen, wobei dieses Modul ausgestaltet ist zum:
wenn ein Benutzer eine neue Anwendung installiert, Anzeigen eines Setup-Dialogfelds, wenn die Anwendung erfolgreich installiert ist, und es wird ein der Anwendung entsprechendes Symbol auf einem Desktop hinzugefügt, wobei das Dialogfeld alternative Eigenschaften enthält,
Erkennen der Benutzerauswahl anhand der alternativen Eigenschaften, die in dem Setup-Dialogfeld enthalten sind, und
Einstellen der ausgewählten Eigenschaften als die Eigenschaften des der Anwendung entsprechenden Symbols.

10. Vorrichtung nach Anspruch 9, wobei das Ereignis, das in Bezug auf das Symbol ausgeführt wird und das anzuzeigende Symbol steuert, umfasst: Empfangen von neuen Dienstinformationen durch eine dem Symbol entsprechende Anwendung, oder Klicken auf das Symbol durch einen Benutzer,
wobei das Überwachungsmodul (401) umfasst:
eine Überwachungseinheit (4011), die dazu ausgestaltet ist, zu überwachen, ob ein Ereignis vorliegt, das in Bezug auf das Symbol ausgeführt wird und das anzuzeigende Symbol steuert,
eine Beurteilungseinheit (4012), die dazu ausgestaltet ist, zu beurteilen, ob sich ein Endgerät, wo sich das Symbol befindet, in einem Entsperrzustand befindet und ob sich ein Anzeigebereich des Symbols auf einer aktuellen Anzeigeseite des Endgeräts befindet, wenn das Ereignis, welches das anzuzeigende Symbol steuert, von einer dem Symbol entsprechenden Anwendung neue Dienstinformationen empfängt, und eine Anweisung an eine Auslöseeinheit (4013) zu senden, wenn sich das Endgerät, wo sich das Symbol befindet, in dem Entsperrzustand befindet und sich der Anzeigebereich des Symbols auf der aktuellen Anzeigeseite des Endgeräts befindet, und
die Auslöseeinheit (4013), die dazu ausgestaltet ist, das Bestimmungsmodul (402) auszulösen, einen Vorgang auszuführen, wenn das Ereignis, welches das anzuzeigende Symbol steuert, auf das Symbol durch einen Benutzer klickt oder um die Anweisung von der Beurteilungseinheit (4012) zu empfangen, um das Bestimmungsmodul (402) auszulösen und einen Vorgang auszuführen.

11. Vorrichtung nach Anspruch 10, wobei das Bestimmungsmodul (402) umfasst:
eine erste Abfrageeinheit (4021), die dazu ausgestaltet ist, Animationsanzeigeparameter abzufragen, die Eigenschaften des Symbols in voreingestellten entsprechenden Beziehungen zwischen den Eigenschaften des Symbols und den Animationsanzeigeparametern entsprechen, und
eine erste Bestimmungseinheit (4022), die dazu ausgestaltet ist, die Animationsanzeigeparameter gemäß abgefragten Ergebnissen zu bestimmen.

12. Vorrichtung gemäß Anspruch 9, wobei die Vorrichtung zum Anzeigen von mehreren Symbolen verwendet wird, die ein erstes Symbol und ein zweites Symbol umfassen,
wobei das Ereignis, das in Bezug auf die mehreren Symbole ausgeführt wird und die mehreren anzuzeigenden Symbole steuert, umfasst:
Aktualisieren einer Position des ersten Symbols, um an das zweite Symbol anzugrenzen, oder
das erste Symbol tritt zum ersten Mal auf einem Desktop eines Systems auf und grenzt an das zweite Symbol an.

13. Vorrichtung nach Anspruch 12, wobei das Bestimmungsmodul (402) umfasst:
eine Vergleichseinheit (4023), die dazu ausgestaltet ist, Eigenschaften des ersten Symbols mit Eigenschaften des zweiten Symbols zu vergleichen,
eine zweite Abfrageeinheit (4024), die dazu ausgestaltet ist, dem ersten Symbol entsprechende Animationsanzeigeparameter und dem zweiten Symbol entsprechende Animationsanzeigeparameter in voreingestellten entsprechenden Beziehungen zwischen Vergleichsergebnissen und den Animationsanzeigeparametern abzufragen, und
eine zweite Bestimmungseinheit (4025), die dazu ausgestaltet ist, die dem ersten Symbol entsprechenden Animationsanzeigeparameter und die dem zweiten Symbol entsprechenden Animationsanzeigeparameter gemäß den abgefragten Ergebnissen zu bestimmen.

14. Vorrichtung nach Anspruch 9, wobei das Anzeigemodul (403) umfasst:
eine erste Anzeigeeinheit (4031), die dazu ausgestaltet ist, das Symbol zu steuern, sodass es sich auf einem Desktop eines Systems in Übereinstimmung mit einer Häufigkeit und einer Bewegungsrichtung in den Animationsanzeigeparametern bewegt, und
eine zweite Anzeigeeinheit (4032), die dazu ausgestaltet ist, ein dem Symbol entsprechendes Regenerationssymbol in einer voreingestellten Weise zu erzeugen und das Symbol und das Regenerationssymbol auf dem Desktop des Systems in Übereinstimmung mit der Häufigkeit in den Animationsanzeigeparametern und einer Anzeigereihenfolge des Regenerationssymbols und des Symbols aufeinanderfolgend anzuzeigen.

15. Computerprogramm, das, wenn es auf einer Vorrichtung ausgeführt wird, ein Verfahren gemäß einem der Ansprüche 1 bis 8 ausführt.

## Revendications

1. Procédé d'affichage d'une icône, le procédé comprenant les étapes ci-dessous consistant à :
surveiller (101, 201, 301) l'existence éventuelle d'un événement qui est mis en œuvre par rapport à l'icône et qui commande l'icône devant être affichée ;
si l'événement qui commande l'icône devant être affichée est déclenché, déterminer (102) des paramètres d'affichage d'animation selon des propriétés de l'icône, lesdites propriétés étant prédéfinies par un utilisateur et comprenant des caractères qui définissent des effets d'affichage correspondant aux caractères ; et
commander (103) l'icône devant être affichée, de manière animée, selon les paramètres d'affichage d'animation ;
le procédé étant **caractérisé en ce qu'**il comprend en outre une étape consistant à définir les propriétés de l'icône, par le biais d'un utilisateur, ladite étape comprenant les étapes ci-dessous consistant à :
lorsqu'un utilisateur installe une nouvelle application, afficher une boîte de dialogue de configuration si l'application est correctement installée et si une icône correspondant à l'application est ajoutée sur un bureau, dans lequel la boîte de dialogue contient des propriétés alternatives ;
détecter la sélection de l'utilisateur à partir des propriétés alternatives contenues dans la boîte de dialogue de configuration ; et
définir les propriétés sélectionnées comme étant les propriétés de l'icône correspondant à l'application.

2. Procédé selon la revendication 1, dans lequel l'événement qui est mis en œuvre par rapport à l'icône et qui commande l'icône devant être affichée comprend l'étape ci-dessous consistant à :
recevoir de nouvelles informations de service, par le biais d'une application correspondant à l'icône ; ou
cliquer sur l'icône, par le biais d'un utilisateur.

3. Procédé selon la revendication 2, dans lequel, lors de la réception des nouvelles informations de service par le biais de l'application correspondant à l'icône, le procédé comprend en outre les étapes ci-dessous consistant à :
juger (202) si un terminal où l'icône est située est dans un état déverrouillé et si une zone d'affichage de l'icône est située dans une page d'affichage en cours du terminal ; et
si le terminal où l'icône est située est dans un état déverrouillé, et si la zone d'affichage de l'icône est située dans la page d'affichage en cours du terminal, mettre en œuvre (203) une étape de détermination des paramètres d'affichage d'animation correspondant à l'icône selon des propriétés de l'icône.

4. Procédé selon la revendication 2, dans lequel l'étape de détermination (102) des paramètres d'affichage d'animation selon les propriétés de l'icône comprend les étapes ci-dessous consistant à :
interroger (2041) des paramètres d'affichage d'animation correspondant aux propriétés de l'icône dans des relations correspondantes prédéfinies entre les propriétés de l'icône et les paramètres d'affichage d'animation ; et
déterminer (2042) les paramètres d'affichage d'animation selon les résultats interrogés.

5. Procédé selon la revendication 1, dans lequel le procédé est utilisé en vue d'afficher une pluralité d'icônes, comprenant une première icône et une seconde icône ;
dans lequel l'événement qui est mis en œuvre par rapport à la pluralité d'icônes et qui commande la pluralité d'icônes devant être affichées comprend l'étape ci-dessous consistant à :
mettre à jour une position de la première icône afin qu'elle soit adjacente à la seconde icône ; ou
dans lequel la première icône apparaît sur le bureau d'un système pour la première fois et est adjacente à la seconde icône.

6. Procédé selon la revendication 5, dans lequel les propriétés comprennent une catégorie et un niveau.

7. Procédé selon la revendication 5, dans lequel l'étape de détermination (102) des paramètres d'affichage d'animation selon les propriétés de la pluralité d'icônes comprend les étapes ci-dessous consistant à :
comparer (3021) des propriétés de la première icône à des propriétés de la seconde icône ;
interroger des paramètres d'affichage d'animation correspondant à la première icône, et des paramètres d'affichage d'animation correspondant à la seconde icône, dans des relations correspondantes prédéfinies entre des résultats de comparaison et les paramètres d'affichage d'animation ; et
déterminer (3023) les paramètres d'affichage d'animation correspondant à la première icône et les paramètres d'affichage d'animation correspondant à la seconde icône, selon les résultats interrogés.

8. Procédé selon la revendication 1, dans lequel l'étape de commande (103) de l'icône devant être affichée, de la manière animée, selon les paramètres d'affichage d'animation, comprend les étapes ci-dessous consistant à :
commander (2051, 3031) le déplacement de l'icône sur un bureau d'un système selon une fréquence et une direction de déplacement dans les paramètres d'affichage d'animation ; ou
générer (2052, 3032) une icône de régénération correspondant à l'icône, d'une manière prédéfinie, et afficher successivement l'icône et l'icône de régénération sur un bureau d'un système selon une fréquence dans les paramètres d'affichage d'animation et une séquence d'affichage de l'icône de régénération et de l'icône.

9. Dispositif destiné à afficher une icône, le dispositif comprenant :
un module de surveillance (401) configuré de manière à surveiller l'existence éventuelle d'un événement qui est mis en œuvre par rapport à l'icône et qui commande l'icône devant être affichée, et à déclencher un module de détermination en vue de mettre en œuvre une opération lorsque l'événement qui commande l'icône devant être affichée est déclenché ;
le module de détermination (402) étant configuré de manière à déterminer des paramètres d'affichage d'animation selon des propriétés de l'icône, lesdites propriétés étant prédéfinies par un utilisateur et comprenant des caractères qui décrivent des effets d'affichage correspondant aux caractères ; et
un module d'affichage (403) configuré de manière à commander l'icône devant être affichée, de manière animée, conformément aux paramètres d'affichage d'animation ;
le dispositif étant **caractérisé en ce qu'**il comprend en outre un module configuré de manière à définir les propriétés de l'icône, par le biais d'un utilisateur, ledit module étant configuré de manière à :
lorsqu'un utilisateur installe une nouvelle application, afficher une boîte de dialogue de configuration si l'application est correctement installée et si une icône correspondant à l'application est ajoutée sur un bureau, dans lequel la boîte de dialogue contient des propriétés alternatives ;
détecter la sélection de l'utilisateur à partir des propriétés alternatives contenues dans la boîte de dialogue de configuration ; et
définir les propriétés sélectionnées comme étant les propriétés de l'icône correspondant à l'application.

10. Dispositif selon la revendication 9, dans lequel l'événement qui est mis en œuvre par rapport à l'icône et qui commande l'icône devant être affichée comprend l'étape ci-après consistant à : recevoir de nouvelles informations de service, par le biais d'une application correspondant à l'icône ; ou cliquer sur l'icône, par le biais d'un utilisateur ;
dans lequel le module de surveillance (401) comprend :
une unité de surveillance (4011) configurée de manière à surveiller l'existence éventuelle de l'événement qui est mis en œuvre par rapport à l'icône et qui commande l'icône devant être affichée ;
une unité de jugement (4012) configurée de manière à juger si un terminal où l'icône est située est dans un état déverrouillé et si une zone d'affichage de l'icône est située dans une page d'affichage en cours du terminal, lorsque l'événement qui commande l'icône devant être affichée reçoit de nouvelles informations de service par le biais d'une application correspondant à l'icône, et à transmettre une instruction à une unité de déclenchement (4013) lorsque le terminal où l'icône est située est dans un état déverrouillé et lorsque la zone d'affichage de l'icône est située dans la page d'affichage en cours du terminal ; et
l'unité de déclenchement (4013) étant configurée de manière à déclencher le module de détermination (402) afin de mettre en œuvre une opération lorsque l'événement qui commande l'icône devant être affichée est un clic sur l'icône, effectué par un utilisateur, ou à recevoir l'instruction en provenance de l'unité de jugement (4012) afin de déclencher le module de détermination (402) de manière à mettre en œuvre une opération.

11. Dispositif selon la revendication 10, dans lequel le module de détermination (402) comprend :
une première unité d'interrogation (4021) configurée de manière à interroger des paramètres d'affichage d'animation correspondant à des propriétés de l'icône, dans des relations correspondantes prédéfinies entre les propriétés de l'icône et les paramètres d'affichage d'animation ; et
une première unité de détermination (4022) configurée de manière à déterminer les paramètres d'affichage d'animation selon des résultats interrogés.

12. Dispositif selon la revendication 9, dans lequel le dispositif est utilisé pour afficher une pluralité d'icônes, comprenant une première icône et une seconde icône ;
dans lequel l'événement qui est mis en œuvre par rapport à la pluralité d'icônes et qui commande la pluralité d'icônes devant être affichées comprend l'étape ci-dessous consistant à :
mettre à jour une position de la première icône afin qu'elle soit adjacente à la seconde icône ; ou
dans lequel la première icône apparaît sur le bureau d'un système pour la première fois et est adjacente à la seconde icône.

13. Dispositif selon la revendication 12, dans lequel le module de détermination (402) comprend :
une unité de comparaison (4023) configurée de manière à comparer des propriétés de la première icône à des propriétés de la seconde icône ;
une seconde unité d'interrogation (4024) configurée de manière à interroger des paramètres d'affichage d'animation correspondant à la première icône, et des paramètres d'affichage d'animation correspondant à la seconde icône, dans des relations correspondantes prédéfinies entre des résultats de comparaison et les paramètres d'affichage d'animation ; et
une seconde unité de détermination (4025) configurée de manière à déterminer les paramètres d'affichage d'animation correspondant à la première icône, et les paramètres d'affichage d'animation correspondant à la seconde icône, selon les résultats interrogés.

14. Dispositif selon la revendication 9, dans lequel le module d'affichage (403) comprend :
une première unité d'affichage (4031) configurée de manière à commander le déplacement de l'icône sur un bureau d'un système selon une fréquence et une direction de déplacement dans les paramètres d'affichage d'animation ; et
une seconde unité d'affichage (4032) configurée de manière à générer une icône de régénération correspondant à l'icône, de manière prédéfinie, et à afficher successivement l'icône et l'icône de régénération sur le bureau du système, selon la fréquence dans les paramètres d'affichage d'animation et une séquence d'affichage de l'icône de régénération et de l'icône.

15. Programme informatique qui, lorsqu'il est exécuté sur un dispositif, met en œuvre un procédé selon l'une quelconque des revendications 1 à 8.
